# EUROPÄISCHE PATENTANMELDUNG

(11) **EP 2 696 455 A2**
(43) Veröffentlichungstag der Anmeldung: **12.02.2014**
(21) Anmeldenummer: 13003968.8
(22) Anmeldetag: 08.08.2013
(51) Int. Cl.: H02G 3/04

(54) **Kabelschlauch**

(30) Priorität: 08.08.2012 DE 102012015546
(71) Anmelder: Rüttiger, Maximillian, 83209 Prien (DE); Meyer, Horst, 32694 Dörentrup (DE)
(72) Erfinder: Rüttiger, Maximillian, 83209 Prien (DE); Meyer, Horst, 32694 Dörentrup (DE)
(74) Vertreter: Leinweber & Zimmermann

(57) **Zusammenfassung**

Die Erfindung betrifft einen Kabelschlauch mit einem ersten Ende und einem zweiten Ende, wobei wenigstens eines der Enden einen Verbindungsabschnitt mit einer Verbindungsstruktur aufweist, mit der der Kabelschlauch an einem Teil eines Kabelführungssystems, das einen Gegenverbindungsabschnitt zum Verbinden mit der Verbindungsstruktur aufweist, lösbar befestigt werden kann, wobei der Verbindungsabschnitt/die Verbindungsabschnitte innen und/oder außen an dem Kabelschlauch gebildet ist/sind.

## Beschreibung

Die Erfindung betrifft einen Kabelschlauch, der an wenigstens einem seiner Enden einen Verbindungsabschnitt mit einer Verbindungsstruktur aufweist. Die Verbindungsstruktur kann innen oder außen an dem Kabelschlauch gebildet sein und ist dazu geeignet, den Kabelschlauch an einem Teil eines Kabelführungssystems, das einen Gegenverbindungsabschnitt aufweist, lösbar zu befestigen.

Es sind Kabelschläuche bekannt, die mit wenigstens einem Ende mit einem Verbindungselement kraftschlüssig verbunden, z. B. über eine Gewindeverbindung, oder auf ein Verbindungselement aufgeschrumpft oder aufgeschraubt werden können. Beim Schrumpfen und Kleben handelt es sich um Verbindungen, die im Regelfall nicht zerstörungsfrei wieder lösbar sind.

Weitere bekannte Verbindungen sind die Verwendung von Kabelbindern oder Schlauchklemmen, mit der der Kabelschlauch auf einem Rohrabschnitt festgeklemmt wird, wobei sich diese Verbindung speziell bei Rohrabschnitten mit einer harten Oberfläche leicht ungewollt lösen kann.

Der Fachmann, dem bekannte Verbindungsschläuche zu umständlich zu montieren sind, oder bei dem der Einsatz von bekannten Verbindungsschläuchen hohe Investitionskosten nach sich ziehen würde, steht daher vor der Aufgabe, einen Kabelschlauch zu finden, der schnell und ohne Verwendung von Werkzeugen mit verschiedenen Kabelführungssystemen oder Kabelführungsketten lösbar verbindbar ist.

Diese Aufgabe wird erfindungsgemäß durch den Gegenstand des Anspruchs 1 gelöst.

Die Erfindung betrifft einen Kabelschlauch mit einem ersten Ende und einem zweiten Ende, wobei wenigstens das erste und/oder zweite Ende einen Verbindungsabschnitt mit einer Verbindungsstruktur aufweist, mit der der Kabelschlauch an einem Teil eines Kabelführungssystems, das einen Gegenverbindungsabschnitt zum Verbinden mit der Verbindungsstruktur aufweist, lösbar befestigt werden kann. Dabei ist der Verbindungsabschnitt bzw. sind die Verbindungsabschnitte innen und/oder außen an dem Kabelschlauch gebildet.

Bei dem Kabelschlauch handelt es sich bevorzugt um einen Kabelschlauch, der selbst einen Teil eines Kabelführungssystems bildet, das heißt, der einen Durchmesser aufweist, der zumindest die Anzahl von Kabeln aufnehmen kann, die maximal von dem Kabelführungssystem im Bereich des Einsatzes des Kabelschlauchs geführt werden können. Normalerweise weist der Kabelschlauch über seine gesamte Länge einen gleichbleibenden Durchmesser bzw. eine gleichbleibende Querschnittsfläche auf, er kann aber auch tailliert sein, mit identischen Durchmessern an den beiden Enden und einem bevorzugt kontinuierlich abnehmenden oder zunehmenden Durchmesser von jedem der Enden zu einem Mittelabschnitt in Längsrichtung. Auch die Durchmesser der beiden Enden müssen nicht zwangsläufig identisch sein, sondern können unterschiedliche Maße aufweisen und/oder elastisch sein. Der Kabelschlauch kann auch eine von der Kreisform abweichende Querschnittsform aufweisen. Er kann bspw. oval oder polygonal ausgeführt sein. Bei Einsatz von einem Klett- bzw. Flächenhaftverschluß bildenden Verbindungsabschnitten und Gegenverbindungsabschnitten kann eine besonders zugfeste Verbindung erhalten werden. Das kann zur Zugentlastung von Kabeln bzw. Leitungen beitragen.

Der Verbindungsabschnitt ist bevorzugt in Umfangsrichtung am Ende des Kabelschlauchs am gesamten Kabelschlauch gebildet und erstreckt sich um eine endliche Länge in die Längsrichtung des Kabelschlauchs. Gleiches gilt für den Gegenverbindungsabschnitt, der sich bevorzugt ebenfalls in Umfangsrichtung um den gesamten Umfang des den Gegenverbindungsabschnitt tragenden Teils erstreckt und in Längsrichtung eine endliche Länge aufweist.

In einer bevorzugten Ausführung ist der Kabelschlauch zumindest im Bereich des Verbindungsabschnitts geschlitzt, um eine passgenaue Auflage des Verbindungsabschnitts auf dem Gegenverbindungsabschnitt zu ermöglichen. Das heißt, der Schlitz ermöglich es, das Ende des Kabelschlauchs aufzuweiten, um ihn leicht über den Gegenverbindungsabschnitt ziehen zu können. Anschließend kann der Schlitz wieder geschlossen werden, wodurch der Kabelschlauch mit dem Verbindungsabschnitt passgenau auf dem Gegenverbindungsabschnitt liegt. Dabei kann der Schlitz in Längsrichtung des Kabelschlauchs länger sein als der Verbindungsabschnitt. Der oder die Schlitze sind vorzugsweise dort angeordnet, wo der Adapter oder das Kettenglied einen Kabeleinführschlitz hat, wodurch die Kabel leicht in verschiedene Kabelkammern des Verbindungselementes bzw. des Kettengliedes eingelegt werden können. Dazu kann das Verbindungselement oder Kettenglied mit dem Kabelschlauch verbunden bleiben oder es kann vom Kabelschlauch gelöst werden. So können auch bereits in einem Kabelschlauch oder auch in den Verbindungselementen geführte Kabel leicht in den Kabelschlauch eingeführt werden. Das Verbindungselement kann dabei eine oder mehrere separate Kabelkammern aufweisen.

Bei der an oder auf dem Verbindungsabschnitt des Kabelschlauchs gebildeten Verbindungsstruktur kann es sich z. B. um eine Haken- oder Schlaufenanordnung eines Klettverschlusses handeln. Der Gegenverbindungsabschnitt weist dann die andere der Haken- oder Schlaufenanordnung auf, so dass der Kabelschlauch mit einem Klettverschluss an dem den Gegenverbindungsabschnitt aufweisenden Teil der Kabelführungsstruktur befestigt werden kann.

Alternativ kann der Verbindungsabschnitt und/oder der Gegenverbindungsabschnitt auch eine adhäsive Schicht aufweisen, mit der die beiden Abschnitte mehrfach lösbar verbunden werden können, wie z. B. die bekannten Post-it Zettel. Auch ein Magnet und eine magnetische Schicht können als Verbindungs- und Gegenverbindungsstruktur dienen. Weiterhin können der Verbindungsabschnitt und der Gegenverbindungsabschnitt auch durch Druckknöpfe, Hakenverbindungen oder Knopfverbindungen miteinander verbindbar sein, wobei der Verbindungsabschnitt und der Gegenverbindungsabschnitt bevorzugt jeweils identische Teile der Verbindungen aufweisen, die im Zusammenwirken dann den Kabelschlauch an dem Teil der Kabelführungsstruktur befestigen. Alternativ können auch bekannte Klips- oder Klickverbindungen benutzt werden. Weitere, wenn auch weniger bevorzugte Verbindungen sind z. B. Nietverbindungen, Schraubverbindungen (z. B. mit in der Gegenverbindungsfläche gebildeten Gewindebohrungen, in die Befestigungsschrauben, die durch am Kabelschlauch gebildete bevorzugt mit Ösen verstärkte Öffnungen gesteckt und in die Gewindebohrungen eingeschraubt werden) oder Verbindungen, bei denen ein Faden oder Band durch Öffnungen im Kabelschlauch und im Teil des Kabelführungssystems gefädelt wird, also die beiden Teile praktisch miteinander vernäht werden.

Bei dem Teil des Kabelführungssystems kann es sich z. B. um ein Kabelkettenglied, einen beliebigen Adapter für die Kabelkette, eine Tischanbindung oder sonstige Anbindung, eine Bodenplatte, einen Befestigungsclip oder ein anderes Kabelführungs- oder Kabelverbindungselement oder ein damit verbindbares sonstiges Führungs- oder Verbindungselement oder eine Zugentlastung oder einen Adapter oder eine Kabelwanne handeln.

Der Kabelschlauch besteht bevorzugt aus einem flexiblen Material, z. B. einem Gewebe, Leder oder einem weichen, elastischen Kunststoff. Der Kabelschlauch kann zusätzlich ein Skelett aufweisen, so dass er im nicht verbundenen Zustand nicht kollabiert. Das Skelett kann eine Art Rahmen sein, das die Länge und/oder den Durchmesser des Kabelschlauchs bestimmt, oder eine Spirale (wie z. B. von Staubsaugerschläuchen bekannt), die eine Einstellung der Länge des Kabelschlauchs an die örtlichen Gegebenheiten ermöglicht und die Freiheitsgrade der Bewegung des Kabelschlauchs nicht einschränkt. Das Skelett kann aber auch aus Kabelführungselementen bestehen, die fest mit dem Kabelschlauch verbunden sind. Bei dieser Lösung kann der Kabelschlauch im Bereich der fest mit dem Kabelschlauch verbundenen Kabelführungselemente bevorzugt wiederverschließbar geschlitzt sein, um die Durchführung der Kabel durch diese Kabelführungselemente zu erleichtern. Das Skelett kann eine Kette aus einer Vielzahl von Verbindungselementen aufweisen, die eine Kabelschlange bilden. Durch eine solche Kabelführungskette kann der Kabelschlauch so abgestützt werden, dass er nicht einknickt. Dazu kann die gesamte Kabelführungskette mit dem bspw. aus einem textilen Material gebildeten Kabelschlauch umhüllt bzw. verkleidet werden. Dann ist der Kabelschlauch "druckstabil" und entsprechend den Gestaltungswünschen der Benutzer gebildet. Einbeulungen werden kaum noch beobachtet. Ferner kann bei Verwendung von Kabelführungsketten sichergestellt werden, dass vorgegebene Biegeradien nicht unterschritten werden. Das ist insbesondere bei der Führung von Lichtwellenleitern vorteilhaft.

Bevorzugt ist der Kabelschlauch über seine gesamte axiale Länge geschlitzt und weist einen lösbaren und wiederverschließbaren Verschluss auf. Das heißt, der Kabelschlauch kann nach der Montage der Kabelkette um einen Abschnitt der Kabelkette gelegt werden und dort verschlossen und mit einem oder mehreren der Teile des Kabelführungssystems verbunden werden. Bei dem Verschluss kann es sich um einen Klettverschluss handeln, einen Reißverschluss, eine Druckknopf- oder Knopfleiste, einen Magnetverschluss oder einen auf dem Nut-Feder-Prinzip basierenden Verschluss, bei dem eine Leiste oder ähnliches in eine Nut gedrückt wird, deren Enden elastisch verformbar sind und die beim Eindrücken der Leiste auseinandergedrückt werden und sich hinter der Leiste wieder elastisch schließen.

Der Kabelschlauch kann auch an der Innenseite oder der Außenseite im Wesentlichen ganzflächig als eine Haken- oder Schlaufenanordnung eines Klettverschlusses gebildet sein, und alle oder mehrere von dem Kabelschlauch umschlossenen oder den Kabelschlauch umgebenden Teile des Kabelführungssystems können als Gegenverbindungsabschnitt eine Gegenverbindungsstruktur mit der anderen der Haken- oder Schlaufenanordnung aufweisen. Dadurch kann der Kabelschlauch über seine Länge mit mehreren Teilen des Kabelführungssystems verbunden werden, was z. B. bei einer längeren Streckenführung verhindern kann, dass der Kabelschlauch durchhängt und dadurch die Endverbindungen des Kabelschlauchs mit den jeweiligen Anschlussteilen mehr als notwendig belastet werden.

Der Verbindungsabschnitt und/oder der Gegenverbindungsabschnitt können ganzflächig oder nur bereichsweise die Verbindungsstruktur bzw. die Gegenverbindungsstruktur aufweisen. So kann z. B. die adhäsive Schicht aus einer Mehrzahl von Punkten bestehen, die gleichmäßig über den Umfang der Verbindungsstruktur und/oder Gegenverbindungsstruktur verteilt sind, getrennt durch Zwischenräume, die kein adhäsives Material aufweisen. Gleiches gilt für die Klett- und Magnetverbindung sowie alle weiteren Verbindungen, die flächig ausgebildet sein können.

Bevorzugt ist der Kabelschlauch im Wesentlichen wasserdicht und/oder staubdicht und/ oder spänedicht und/oder feuerfest und/oder nagerresistent. Mit "feuerfest" ist natürlich die Feuerfestigkeit oder Feuerbeständigkeit entsprechend der einschlägigen Normen gemeint und keine absolute Feuerfestigkeit. Nagerresistent soll bedeuten, dass durch entsprechende Auswahl des Materials oder entsprechende Imprägnierung des Materials z. B. Mäuse davon abgehalten werden, den Kabelschlauch anzunagen. Der Kabelschlauch kann auch eine Kindersicherung darstellen, da die Kabel so nicht einzeln gegriffen werden können.

Aus der ganzen Beschreibung ist klar, dass der Kabelschlauch aufgrund seiner Ausgestaltung und Verbindung mit weiteren Elementen, z. B. des Kabelführungssystems, Kräfte in Längsrichtung aufnehmen und übertragen kann. Der Kabelschlauch ist somit nicht nur Teil eines Kabelführungssystems, sondern gleichzeitig Teil der durch das Kabelführungssystem gebildeten Energieführungskette.

Gemäß einem weiteren Gesichtspunkt betrifft die Erfindung einen Kabelschlauch, der an einem axialen Ende mit einem Verbindungselement ausgestattet ist, wobei das Verbindungselement einen zum Ankoppeln an ein anderes Element des Kabelführungssystems ausgelegten vorzugsweise zentralen Kopplungsbereich aufweist, und eine innere Begrenzungsfläche des Kabelschlauchs zumindest abschnittweise an einer äußeren Begrenzungsfläche des Verbindungselements angebracht, insbes. lösbar befestigt ist. Dabei kommt es zu einer die Befestigung des Verbindungselements begünstigenden flächigen Anlage des Befestigungsbereichs an der inneren Begrenzungsfläche des Kabelschlauchs.

Bei dieser Ausführungsform der Erfindung wird eine variable Ankopplung des als Modul eines Kabelführungssystems ausgeführten Kabelschlauchs an beliebigen Teilen eines Kabelführungssystems ermöglicht, vorzugsweise ohne dass Verbindungselemente in Erscheinung treten. Die Verbindungselemente werden vorzugsweise vollständig von den entsprechend den Wünschen des Benutzers gestalteten Kabelschläuchen abgedeckt. Zusätzlich zu der Bereitstellung einer Verbindungsmöglichkeit zu anderen Bauteilen des Kabelführungssystems kann durch ein entsprechendes Verbindungselement, ebenso wie durch Kettenglieder gemäß den vorstehend erläuterten Ausführungsformen der Erfindung, eine Stabilisierung des Kabelschlauchs erfolgen. Dazu ist das Verbindungselement aus einem Material gebildet, welches eine höhere Biegesteifigkeit aufweist als das Material des Kabelschlauchs. Es kann bspw. zumindest teilweise aus Metall ausgeführt sein, ist vorzugsweise aber zumindest teilweise aus Kunststoff gefertigt. Das Verbindungselement kann einstückig ausgeführt sein. Es kann bspw. zumindest teilweise durch Spritzgießen hergestellt werden.

Zusätzlich oder alternativ ist allerdings auch an den Einsatz mehrteiliger Verbindungselemente im Rahmen dieser Erfindung gedacht.

Unter Gewährleistung eines ausreichend großen Aufnahmeraums für die in dem Kabelschlauch aufzunehmenden Leitungen kann die gewünschte Stabilisierung des Kabelschlauchs und eine stabile Verbindung mit anderen Elementen des Kabelführungssystems sichergestellt werden, wenn die äußere Begrenzungsfläche des Verbindungselements von einem über einen bezüglich der Längsrichtung des Schlauchs etwa radial verlaufenden Haltebereich an dem Kopplungsbereich gehaltenen Befestigungsbereich gebildet ist. Mit Hilfe des Haltebereichs kann ein radialer Abstand zwischen Befestigungsbereich einerseits und Kopplungsbereich andererseits hergestellt werden, welcher zur Bereitstellung des gewünschten Aufnahmeraums für die Leitungen dimensioniert werden kann.

Im Sinne einer Stabilisierung der Gesamtanordnung hat es sich als zweckmäßig erwiesen, wenn der Befestigungsbereich den Ankopplungsbereich mit radialem Abstand zumindest teilweise umläuft, insbes. in einer Radialschnittebene etwa C-förmig ausgeführt ist. Bei der C-förmigen Ausführung des Befestigungsbereichs können Leitungen besonders einfach in den zwischen Kopplungsbereich und Befestigungsbereich gebildeten Aufnahmeraum eingeführt werden, weil ein solcher Befestigungsbereich über nur einen Haltebereich am Kopplungsbereich gehalten werden kann. Bei Einsatz C-förmiger Befestigungsbereiche kann die gesamte Kabelkammer ohne Ablösen des Verbindungselements von dem Kabelschlauch bestückt werden.

Für eine geordnete Kabelführung hat es sich als ebenfalls zweckmäßig erwiesen, wenn das Verbindungselement zwei, drei oder mehr in Umfangsrichtung durch Haltebereiche voneinander getrennte Kabelkammern aufweist, wobei vorzugsweise mindestens einer, insbes. jeder Kabelkammer eine axial verlaufende Ausnehmung bzw. ein axial verlaufender Einführschlitz in dem Befestigungsbereich zugeordnet ist, durch die bzw. den Leitungen in die entsprechende Kabelkammer eingeführt werden können. Zusätzlich oder alternativ können in einzelnen Kabelkammern klappenartige Einführhilfen zugeordnet sein. Ferner ist auch daran gedacht, einander überlappende Befestigungsbereiche vorzusehen, zwischen denen Kabel bzw. Leitungen in die Kabelkammern eingeführt werden können.

Insbes. bei der zuletzt beschriebenen Ausführungsform der Erfindung, aber auch bei anderen die Abdeckung eines Verbindungselements mit dem Kabelschlauch ermöglichenden Ausführungsformen der Erfindung ist auch daran gedacht, das Verbindungselement fest, also nicht zerstörungsfrei lösbar, an dem Kabelschlauch anzubringen. Das Verbindungselement kann also fest, bspw. durch Nieten, An- bzw. Einnähen, Kleben und/oder Verschweißen, oder auch lösbar, bspw. durch Verrasten, Klipsen, mit Hilfe von Flächenhaftverschlüssen, eines Klebebands, Schrauben, Druckknöpfen od. dgl., am Kabelschlauch angebracht sein.

Im Sinne der Bereitstellung längerer Elemente eines Kabelführungssystems können eine Anzahl erfindungsgemäßer Kabelschläuche miteinander verbunden werden. Zu diesem Zweck ist der Kopplungsbereich des Verbindungselements zweckmäßigerweise zum Ankoppeln gleichartiger Kopplungsbereiche ausgelegt. Mit derartigen Kopplungsbereichen wird die Bildung von Gliederketten ermöglicht. In diesem Fall können die am Kabelschlauch angebrachten Verbindungselemente als Kettenglieder eines Kabelführungssystems ausgeführt sein. Entsprechende Kopplungsbereiche weisen zweckmäßigerweise einen Einführabschnitt und einen Aufnahmeabschnitt auf, wobei der Einführabschnitt in einen Aufnahmeabschnitt eines entsprechenden Kopplungsbereichs einführbar ist. Zweckmäßigerweise ist der Einführabschnitt durch Verrasten in dem Aufnahmeabschnitt gegen axiales Ausziehen aus dem Aufnahmeabschnitt sicherbar. Die Verbindung zwischen den Kopplungsbereichen kann gelenkig, insbesondere kardanisch ausgeführt sein. Es kann sich um ein Kugelgelenk handeln, bei dem ein kugelförmiger Einsteckbereich verschwenk- und/oder verdrehbar in einem Aufnahmebereich aufgenommen ist.

Zur Herstellung entsprechender Kabelschläuche bzw. auch zur Herstellung von Kabelschlangen einsetzbare Verbindungselemente sind in den deutschen Patentanmeldungen DE 10 2013 000 826, DE 10 2013 000 827, DE 10 2013 000 829, DE 10 2013 000 905, DE 10 2013 000 906, DE 10 2013 000 855 und DE 10 2013 007 043 beschrieben. Der Offenbarungsgehalt dieser Schrift wird hinsichtlich der Merkmale der Kopplungsbereiche bzw. Verbindungskörper und der unter Verwendung dieser Verbindungskörper hergestellten Kabelführungskörper (Verbindungselemente) hiermit durch ausdrückliche Inbezugnahme in diese Beschreibung aufgenommen.

Wie vorstehend bereits erläutert, hat es sich als besonders zweckmäßig erwiesen, wenn die äußere Begrenzungsfläche des Verbindungselements im wesentlichen vollständig von der inneren Begrenzungsfläche des Kabelschlauchs abgedeckt ist. Dadurch wird eine Gestaltung des äußeren Erscheinungsbildes des Kabelführungssystems ohne Beeinflussung durch die Verbindungselemente ermöglicht.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. Die in der Zeichnung dargestellten Merkmale können je einzeln oder in der gezeigten Kombination den Gegenstand der Erfindung vorteilhaft weiterbilden.

Die Erfindung ist nicht auf die anhand der Zeichnung erläuterten Ausführungsbeispiele eingeschränkt.

In der Zeichnung zeigt:
- **Fig. 1**: einen erfindungsgemäßen Kabelschlauch,
- **Fig. 2**: eine die Montage eines erfindungsgemäßen Kabelschlauchs erläuternde Darstellung und
- **Fig. 3**: zur Herstellung erfindungsgemäßer Kabelschläuche einsetzbare Verbindungselemente.

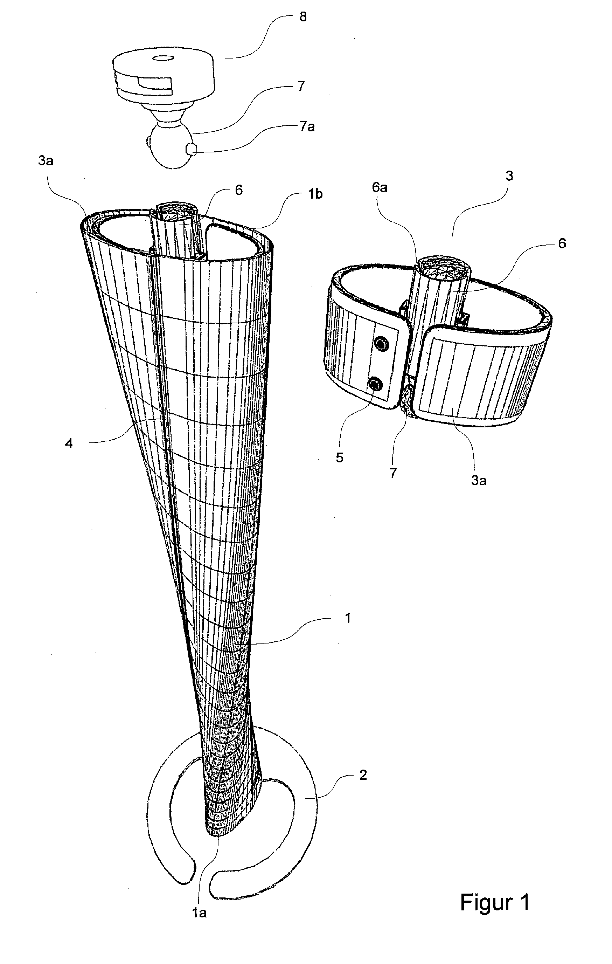

Die Figur 1 zeigt einen Kabelschlauch 1, der mit einem ersten Ende 1 a mit einer Bodenplatte 2 und in oder an einem zweiten Ende 1 b mit einem als Kettenglied 3 ausgeführten Verbindungselement oder einem Adapter verbunden ist. Der Kabelschlauch 1 weist weiterhin einen Verschluss 4 auf, der in axialer Richtung bzw. Längsrichtung des Kabelschlauchs vom ersten Ende 1 a bis zum zweiten Ende 1 b reicht und mit dem der Kabelschlauch 1 über seine gesamte Länge geöffnet werden kann.

Bei einer anderen Ausführungsform der Erfindung kann der Verschluss nur über einen Teil der axialen Länge des Kabelschlauchs verlaufen.

Bei dem Verschluss 4 handelt es sich um einen Klettverschluss, der im Bereich des Verschlusses 4 überlappt, so dass die Hakenelemente des Klettverschlusses in die Schlaufengegenelemente eingreifen können. Alternativ könnte der Verschluss 4 auch ein Reißverschluss, ein Magnetverschluss oder ein anderer geeigneter Verschluss sein.

Im Inneren des Kabelschlauchs 1 können weitere Kettenglieder 3 angeordnet sein, die dem Kabelschlauch 1 eine gewisse Formstabilität geben und einem bereichsweisen Kollabieren des Kabelschlauchs 1 entgegenwirken. Der Kabelschlauch kann aber auch ein Skelett aufweisen, so dass er in sich formstabil ist.

Neben dem Kabelschlauch 1 ist das Kettenglied 3 einer Kabelführungskette abgebildet. Das Kettenglied 3 weist an seinem äußeren Umfang einen Verbindungsbereich oder Gegenverbindungsabschnitt 3a auf. Dieser Gegenverbindungsabschnitt 3a kann bspw. zumindest teilweise eine adhäsive Schicht oder eine Haken- oder Schlaufenstruktur eines Klettverschlusses oder ein magnetisches Material aufweisen. Der Gegenverbindungsabschnitt 3a wird mit einem Verbindungsbereich an dem Kabelschlauch 1 in Überlappung gebracht und befestigt dadurch den Kabelschlauch 1 an dem Kettenglied 3 oder umgekehrt.

Der Gegenverbindungsabschnitt 3a kann auf bestehende Kettenglieder 3 nachträglich aufgebracht, z. B. aufgeklebt, werden. Im gezeigten Ausführungsbeispiel weist das Kettenglied 3 weiterhin zwei Niete 5 auf, die ebenfalls dazu dienen, den Gegenverbindungsabschnitt 3a im Bereich des Endes fest mit dem Kettenglied 3 zu verbinden, um einer Ablösung des Gegenverbindungsabschnitts 3a dort entgegenzuwirken.

Das Kettenglied 3 weist eine Aufnahme 6 und einen Verbindungskopf 7 auf. Zum Verbinden von zwei Kettengliedern 3 kann der Verbindungskopf 7 in die Aufnahme 6 eingedrückt und/oder in der Aufnahme 6 verdreht werden, so dass am Verbindungskopf 7 angeformte Verbindungsnoppen 7a in entsprechende Verbindungsnuten 6a einrasten. Zusätzlich oder alternativ können die Verbindungsnoppen 7a in den Führungsnuten 6a geführt sein, wobei die Verbindung durch Einrasten des Verbindungskopfes 7 in die Aufnahme 6 hergestellt wird.

Die Figur 1 zeigt weiterhin einen Adapter 8, z. B. eine Tischanbindung, der ebenfalls einen Verbindungskopf 7 mit den angeformten Verbindungsnoppen 7a aufweist und der z. B. mit einem Kettenglied 3 verbunden werden kann. Die äußere Umfangsfläche des Adapters 8 kann ebenfalls einen Verbindungsbereich oder Gegenverbindungsbereich bilden, mit einer entsprechenden Verbindungsstruktur oder Gegenverbindungsstruktur, und unmittelbar mit dem Kabelschlauch 1 verbunden werden.

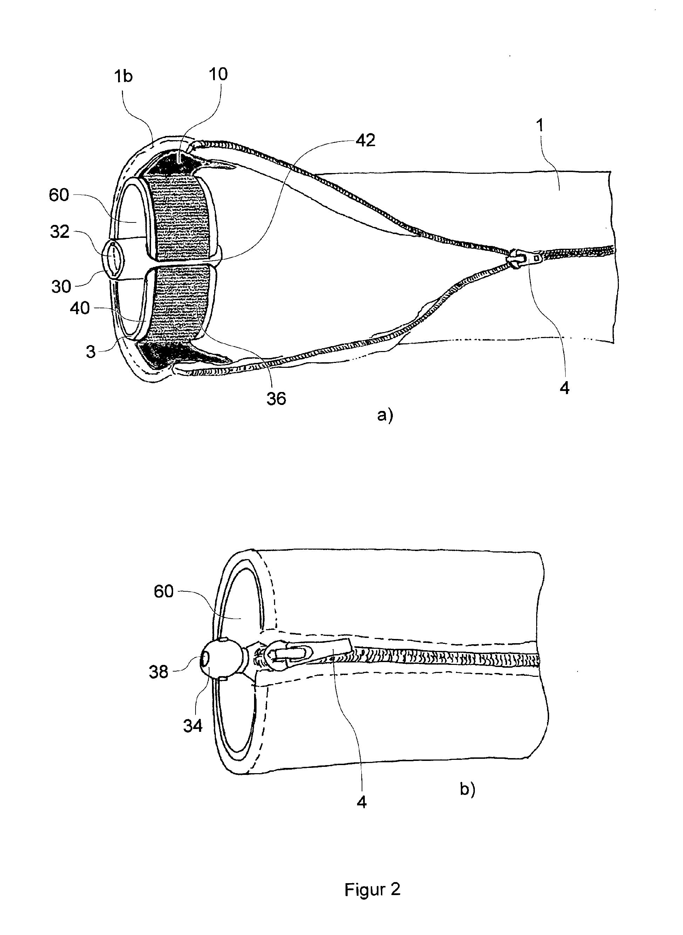

Bei der in Figur 2 dargestellten Ausführungsform der Erfindung ist der Verschluss 4 des Kabelschlauchs 1 als Reißverschluss ausgeführt. Der Kabelschlauch 1 ist an einem axialen Ende 1b auf seiner inneren Begrenzungsfläche mit einem Hakenband 10 eines Flächenhaftverschlusses versehen. Das Hakenband 10 kann auf die innere Begrenzungsfläche des Kabelschlauchs 1 bspw. aufgeklebt, aufgenietet, aufgeschraubt und/oder aufgenäht sein. Das als Kettenglied 3 ausgeführte Verbindungselement umfasst einen zentralen Kopplungsbereich 30 und einen diesen zentralen Kopplungsbereich 30 umlaufenden Befestigungsbereich 40. Der Befestigungsbereich 40 weist in axialer Richtung verlaufende Einführschlitze 42 zum Einführen von Leitungen in Kabelkammern 60 des Verbindungselements bzw. Kettenglieds 3 auf. Der Befestigungsbereich 40 ist an einer äußeren Begrenzungsfläche mit einem Schlaufenband 36 eines Flächenhaftverschlusses ausgestattet. Wenn das Ende 1b des Kabelschlauchs 1 um den Befestigungsbereich 40 des Kettenglieds 3 gelegt wird, gelangen die Haken des Hakenbandes 10 in Eingriff mit den Schlaufen des Schlaufenbandes 36, um so eine lösbare Befestigung des Kettenglieds 3 in dem axialen Ende des Kabelschlauchs 1 zu bewirken. Der Kopplungsbereich 30 weist einen Aufnahmebereich 32 für einen Einsteckbereich 34 eines benachbarten Kettenglieds 3 auf, wie durch eine vergleichende Betrachtung der Darstellung in den Figuren 2a) und 2b) erkennbar ist. Bei der anhand der Figur 2 erläuterten Ausführungsform der Erfindung ist das Kettenglied 3 als Spritzgußteil aus Kunststoff ausgeführt.

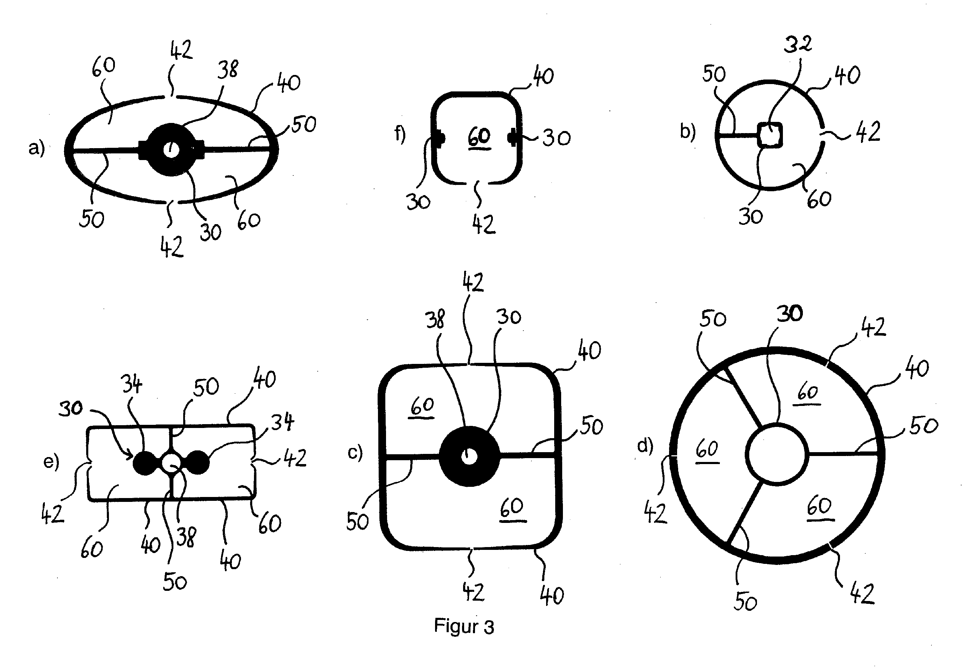

Figur 3 zeigt eine Anzahl von Radialschnittdarstellungen von im Rahmen der Erfindung einsetzbaren Kettengliedern 3 bzw. Verbindungselementen. Das Verbindungselement gemäß Fig. 3a) weist einen zentralen Kopplungsbereich 30 auf, welcher von einem Befestigungsbereich 40 umlaufen wird. Der Befestigungsbereich 40 weist insgesamt eine etwa eliptische Grundform auf. Der Befestigungsbereich 40 ist über bezüglich einer Längsachse des Schlauchs radial verlaufende Haltebereiche 50 an dem zentralen Kopplungsbereich 30 befestigt. Durch die Haltebereiche 50 werden zwischen dem Kopplungsbereich 30 und dem Befestigungsbereich 40 zwei Kabelkammern 60 begrenzt. Jeder der Kabelkammern 60 ist ein Einführschlitz 42 in dem Befestigungsbereich 40 zugeordnet, durch den jeweils Leitungen bzw. Kabel in die entsprechende Kabelkammer 60 eingeführt werden können. Der Kopplungsbereich 30 des in Figur 3a) beschriebenen Kettenglieds 3 ist entsprechend dem Kopplungsbereich 30 des Kettenglieds 3 gemäß Figur 2 ausgeführt. Es weist einen Aufnahmebereich 32 und einen komplementär dazu ausgeführten etwa kugelförmigen Einsteckbereich 34 auf. Einsteckbereich 34 und Aufnahmebereich 32 sind von einem Mittelloch 38 durchsetzt. Durch das Mittelloch 38 kann ein Montagestab, ein Zugseil, eine Schraube oder andere Befestigungsmittel eingeführt sein. Das Mittelloch 38 kann auch an entsprechende Adapter angepasst sein.

Bei der in Figur 3b) dargestellten Ausführungsform der Erfindung ist ein zentraler Kopplungsbereich 30 von einem kreisförmigen Befestigungsbereich 40 umlaufen, der über nur einen Haltebereich 50 an dem Kopplungsbereich 30 befestigt ist. Der Befestigungsbereich 40 weist einen Schlitz zur Einführung von Kabeln bzw. Leitungen in die zwischen dem Kopplungsbereich 30 und dem Befestigungsbereich 40 gebildete Kabelkammer 60 auf.

Diese Ausführungsform der Erfindung ist besonders gut für Kabelschläuche geeignet, bei denen das Verbindungselement bzw. das Kettenglied 3 fest bzw. unlösbar an der inneren Begrenzungsfläche des Kabelschlauchs 1 angebracht ist. Dabei fluchtet der Einführschlitz 42 zweckmäßigerweise mit dem bspw. als Reißverschluss ausgeführten Verschluss 4 des Kabelschlauchs 1.

Bei der in Figur 3b) dargestellten Ausführungsform weist der Kopplungsbereich 30 einen Aufnahmebereich 32 für einen Steckverbinder auf.

Die in Figur 3c) dargestellte Ausführungsform der Erfindung unterscheidet sich im wesentlichen dadurch von der anhand der Figur 3a) erläuterten Ausführungsform, dass der Befestigungsbereich 40 in einer Realschnittebene etwa quadratisch ausgeführt ist. Ebenso wie die Ausführungsform gemäß Figur 3a) weist die Ausführungsform gemäß Figur 3c) zwei Kabelkammern 60 auf, denen jeweils ein Einführschlitz 42 zugeordnet ist. Die Kabelkammern 60 werden zwischen Haltebereichen 50, dem Befestigungsbereich 40 und dem Kopplungsbereich 30 begrenzt.

Die Ausführungsform gemäß Figur 3d) ist im wesentlichen kreisförmig ausgeführt. Sie weist einen als Aufnahme für einen Steckverbinder ausgeführten Kopplungsbereich 30 sowie Befestigungsbereiche 40 auf, die jeweils über sich bezüglich der Längsachse des Kabelschlauchs 1 radial erstreckende Haltebereiche 50 an dem Kopplungsbereich 30 befestigt sind.

Bei der in Figur 3d) dargestellten Ausführungsform der Erfindung werden mit Hilfe von insgesamt drei in Umfangsrichtung voneinander beabstandeten Haltebereichen 50 insgesamt drei Kabelkammern 60 gebildet. Jeder Kabelkammer 60 ist ein Einführschlitz 42 für in die Kabelkammern 60 einzuführende Leitungen bzw. Kabel zugeordnet.

Das Verbindungselement gemäß Fig. 3e) weist eine etwa rechteckige Grundform auf, mit einem zentralen Kopplungsbereich 30 und Befestigungsbereichen 40, welche über Haltebereiche 50 an dem Kopplungsbereich 30 befestigt sind. Der Kopplungsbereich 30 weist zwei Einsteckbereiche 34 auf, denen auf der den Einsteckbereichen 34 abgewandten Seite des Kopplungsbereichs 30 entsprechende komplementär ausgeführte Aufnahmebereiche zugeordnet sind. Zwischen den Einsteckbereichen 34 ist ein Mittelloch 38 zur Durchführung eines Zugseils, einer Schraube oder anderer Befestigungsmittel ausgeführt. Zwischen den Haltebereichen 50, den Befestigungsbereichen 40 und dem Kopplungsbereich 30 sind zwei Kabelkammern 60 begrenzt, denen jeweils ein Einführschlitz 42 zugeordnet ist. Die Einführschlitze 42 werden durch in Richtung auf die Kabelkammern 60 abgebogene Ränder der Befestigungsbereiche 40 gebildet. Durch die abgebogenen Ränder der Befestigungsbereiche 40 wird eine trichterförmige Einführhilfe für in die Kabelkammern 60 einzuführende Kabel bzw. Leitungen bereitgestellt.

Das Verbindungselement gemäß Figur 3f) weist wiederum eine etwa quadratische Grundform auf. Es besteht aus einem C-förmigen Befestigungsbereich 40 und zwei an den inneren Begrenzungsflächen des Befestigungsbereichs 40 angebrachten Kopplungsbereichen 30. Der Befestigungsbereich 40 begrenzt eine Kabelkammer 60, der ein Einführschlitz 42 zugeordnet ist.

Die Ausführungsformen gemäß Figur 3b) und 3f) sind besonders gut für eine nicht zerstörungsfrei lösbare Befestigung an einer inneren Begrenzungsfläche eines Kabelschlauchs 1 geeignet, weil sie nur einen Einführschlitz 42 für Kabel bzw. Leitungen benötigen, der mit dem Verschluss 4 des Kabelschlauchs 1 fluchten kann.

Die Ausführungsformen gemäß den Figuren 3a), 3c), 3d) und 3e) sind besonders gut für eine lösbare Befestigung am Kabelschlauch 1 geeignet. Sie weisen zwei bzw. drei Einführschlitze zum Einführen von Kabeln bzw. Leitungen in die Kabelkammern 60 auf. Die Kabel bzw. Leitungen können vor Anbringen des Verbindungselements an dem Kabelschlauch 1 in die Kabelkammern 60 eingefädelt werden. Die Einführschlitze 42 werden dann ggf. mit Ausnahme eines Einführschlitzes 42 von dem Kabelschlauch 1 abgedeckt.

Die Erfindung ist nicht auf das anhand der Zeichnung erläuterte Ausführungsbeispiel beschränkt. Es ist auch daran gedacht, den Verschluss des Kabelschlauchs 1 bspw. als Klettverschluss, Druckknopfverschluss, Nietverschluss od. dgl. auszubilden. Die Verbindungselemente können drei oder mehr Kabelkammern 60 aufweisen. Die Kopplungsbereiche 30 der Verbindungselemente können eine nahezu beliebige Form besitzen.

Bei bevorzugten Ausführungsformen der Erfindung sind die Kopplungsbereiche, wie anhand der Fig. 3a) bis 3e) erläutert, etwa zentral angeordnet. Sie können aber auch ohne weiteres an den inneren und/oder äußeren Begrenzungsflächen der Befestigungsbereiche 40 angeordnet sein. Sie können die Begrenzungsflächen auch in axialer Richtung zumindest über ein Teil des Verbindungselementumfangs verlängern.

Die wesentlichen Gesichtspunkte der Erfindung lassen sich wie folgt zusammenfassen:

An einem Endabschnitt eines vorzugsweise flexiblen, bspw. textilen Kabelschlauchs, der einen Mantel bildet, ist ein Verbindungselement angebracht. Das Verbindungselement kann bspw auch als Blechteil ausgebildet sein, das mit einem Anschlussstück zum Anschluss einer Kabelführungskette oder eines Adapters (z. B. Tischanbindung oder Bodenplatte) für eine solche Kabelführungskette ausgebildet ist.

Verbindungselemente können auch innerhalb des Kabelschlauchs angeordnet sein. Dadurch wird verhindert, dass der Kabelschlauch einknickt. Es kann auch eine gesamte Kabelschlange mit einem textilen Mantel umhüllt bzw. verkleidet werden. Dann ist der Kabelschlauch "druckstabil" und formschön, da es keine Einbeulungen gibt.

Die Verbindung zwischen dem Kabelschlauch und dem Verbindungselement kann unlösbar fest, bspw. durch Nieten, An- bzw. Einnähen, Kleben und/oder Verschweißen, oder lösbar, bspw. durch Verrasten, Klipsen, mit Hilfe eines Klettverschlusses, unter Verwendung eines Klebebands, als Schraubverbindung oder Druckknopfverbindung, ausgebildet sein.

Das Verbindungselement kann als Kettenglied einer Kabelführungskette ausgebildet sein. Die einzelnen Verbindungselemente können ein, zwei oder mehr Einführbereiche aufweisen, die in entsprechende Aufnahmebereiche anderer Verbindungselemente eingeführt werden können.

Die Verbindungselemente können einen zentralen Kopplungsbereich aufweisen, der zumindest teilweise von einem Befestigungsbereich umlaufen wird. Der Befestigungsbereich bildet dann eine äußere Mantelfläche des Verbindungselements. Die Aufnahmebereiche bzw. Einsteckbereiche der Kopplungsbereiche sind vorzugsweise kompatibel zu Kettengliedern und Adaptern (Tischanbindung, Bodenplatten, Zugentlastung ...) von bekannten Kabelführungssystemen.

C-förmige Verbindungselemente bzw. Kettenglieder, also Verbindungselemente bzw. Kettenglieder mit nur einer Kabelkammer, können auch fest mit dem Kabelschlauch verbunden werden, da nur eine Kammer bedient werden muss.

### Bezugszeichenliste

- 1: Kabelschlauch
- 1 a: erstes Ende
- 1b: zweites Ende
- 2: Bodenplatte
- 3: Kettenglied
- 3a: Verbindungsbereich, Gegenverbindungsabschnitt
- 4: Verschluss
- 5: Niet
- 6: Aufnahme
- 6a: Aufnahmenut
- 7: Verbindungskopf
- 7a: Verbindungsnoppe
- 8: Adapter
- 10: Hakenband
- 30: (zentraler) Kopplungsbereich
- 32: Aufnahmebereich
- 34: Einsteckbereich(e)
- 36: Schlaufenband
- 38: Mittelloch
- 40: Befestigungsbereich(e)
- 42: Einführschlitz / Einführbereich
- 50: Haltebereiche
- 60: Kabelkammern

## Patentansprüche

1. Kabelschlauch mit einem ersten Ende (1 a) und einem zweiten Ende (1 b), wobei wenigstens eines der Enden (1 a, 1 b) einen Verbindungsabschnitt mit einer Verbindungsstruktur aufweist, mit der der Kabelschlauch (1) an einem Teil eines Kabelführungssystems (2, 3, 8), das einen Gegenverbindungsabschnitt (3a) zum Verbinden mit der Verbindungsstruktur aufweist, lösbar befestigt werden kann, **dadurch gekennzeichnet, dass** der Verbindungsabschnitt/die Verbindungsabschnitte innen und/oder außen an dem Kabelschlauch (1) gebildet ist/sind.

2. Kabelschlauch nach Anspruch 1, wobei der Kabelschlauch (1) zumindest im Bereich der Verbindungsabschnitte geschlitzt ist und dadurch eine passgenaue Auflage des Verbindungsabschnitts auf dem Gegenverbindungsabschnitt (3a) ermöglicht.

3. Kabelschlauch nach einem der vorhergehenden Ansprüche, wobei die Verbindungsstruktur des Kabelschlauchs (1) eine Haken- oder Schlaufenanordnung einer Klettverbindung, eine Nut-und-Feder-Verbindung, eine mehrfach lösbare adhäsive Schicht, ein Magnet, ein Teil oder mehrere identische Teile eines Druckknopfes, ein oder mehrere Haken- oder Schlaufen einer Hakenverbindung oder ein Knopf oder mehrere Knöpfe bzw. ein Knopfloch oder mehrere Knopflöcher einer Knopfverbindung ist/sind und der Gegenverbindungsabschnitt (3a) am Teil des Kabelführungssystems (2, 3, 8) eine passende Gegenverbindungsstruktur zu der jeweiligen Verbindungsstruktur aufweist.

4. Kabelschlauch nach einem der vorhergehenden Ansprüche, wobei es sich bei dem Teil des Kabelführungssystems (2, 3, 8) um ein Kettenglied (3), einen Adapter (8), eine Tischanbindung, eine Bodenplatte (2), einen Befestigungsclip oder ein anderes Kabelführungs- oder Kabelverbindungselement handelt.

5. Kabelschlauch nach einem der vorhergehenden Ansprüche, wobei es sich bei dem Kabelschlauch (1) um einen Kabelschlauch aus einem flexiblen Material, z. B. einem Gewebe, Netzstruktur, Geflecht, Metallgeflecht, Leder oder einem weichen elastischen Kunststoff handelt.

6. Kabelschlauch nach einem der vorhergehenden Ansprüche, wobei der Kabelschlauch (1) in Längsrichtung bevorzugt über die gesamte Länge vom ersten Ende (1a) bis zum zweiten Ende (1 b) einen lösbaren Verschluss (4) aufweist, bspw. einen Klettverschluss, einen Reißverschluss, einen Knöpfverschluss, einen Hakenverschluss oder einen Verschluss nach dem Nut-Federprinzip.

7. Kabelschlauch nach einem der vorhergehenden Ansprüche, wobei die Innen- oder Außenseite des Kabelschlauchs (1) als eine von der Haken- oder Schlaufenanordnung eines Klettverschlusses gebildet ist und mehrere oder alle von dem Kabelschlauch (1) umschlossenen oder den Kabelschlauch (1) umgebenden Teile des Kabelführungssystems (2, 3, 8) einen Gegenverbindungsabschnitt (3a) mit der anderen der Haken- und Schlaufenanordnung des Klettverschlusses aufweisen.

8. Kabelschlauch nach einem der vorhergehenden Ansprüche, wobei der Verbindungsabschnitt und/oder der Gegenverbindungsabschnitt (3a) ganzflächig oder nur bereichsweise die Verbindungsstruktur bzw. die Gegenverbindungsstruktur aufweisen.

9. Kabelschlauch nach einem der vorhergehenden Ansprüche, wobei der Kabelschlauch (1) im Wesentlichen wasserdicht und/oder staubdicht und/oder feuerfest und/oder nagerresistent ist.

10. Kabelschlauch nach einem der vorhergehenden Ansprüche, **dadurch gekennzeichnet, dass** der Gegenverbindungsabschnitt (3a) an einem äußeren Umfang eines Kettengliedes (3) angeordnet ist und zur Überlappung mit dem an einer inneren Begrenzungsfläche des Kabelschlauchs (1) angeordneten Verbindungsabschnitt gebracht werden kann.

11. Kabelschlauch, insbes. nach einem der vorhergehenden Ansprüche, **dadurch gekennzeichnet, dass** an einem axialen Ende des Kabelschlauchs (1) ein Verbindungselement mit einem zum Ankoppeln an ein anderes Element des Kabelführungssystems (2, 3, 8) ausgelegten vorzugsweise zentralen Kopplungsbereich (30) angeordnet ist, wobei eine innere Begrenzungsfläche des Kabelschlauchs (1) zumindest abschnittweise an einer äußeren Begrenzungsfläche des Verbindungselements angebracht, insbes. lösbar befestigt ist.

12. Kabelschlauch nach Anspruch 11, **dadurch gekennzeichnet, dass** die äußere Begrenzungsfläche des Verbindungselements von einem über einen bezüglich der Längsrichtung des Kabelschlauchs (1) etwa radial verlaufenden Haltebereich (50) an dem Kopplungsbereich (30) gehaltenen Befestigungsbereich (40) gebildet ist.

13. Kabelschlauch nach Anspruch 12, **dadurch gekennzeichnet, dass** der Befestigungsbereich (40) den Kopplungsbereich (30) mit radialem Abstand zumindest teilweise umläuft, insbes in einer Radialschnittebene etwa C-förmig ausgeführt ist.

14. Kabelschlauch nach Anspruch 12 oder 13, **dadurch gekennzeichnet, dass** das Verbindungselement ein, zwei, drei oder mehr in Umfangsrichtung durch Haltebereiche (50) voneinander getrennte Kabelkammern (60) aufweist, wobei vorzugsweise mindestens einer, insbes. jeder Kabelkammer (60), eine axial verlaufende Ausnehmung bzw. ein axial verlaufender Einführschlitz (42) in dem Befestigungsbereich (40) zugeordnet ist.

15. Kabelschlauch nach einem der Ansprüche 11 bis 14, **dadurch gekennzeichnet, dass** der Kopplungsbereich (30) zum Ankoppeln an einen gleichartigen Kopplungsbereich ausgelegt ist.

16. Kabelschlauch nach einem der Ansprüche 11 bis 15, **dadurch gekennzeichnet, dass** die äußere Begrenzungsfläche des Verbindungselements im wesentlichen vollständig von der inneren Begrenzungsfläche des Kabelschlauchs (1) abgedeckt ist.
